# EUROPEAN PATENT SPECIFICATION

(11) **EP 0 708 800 B1**
(45) Date of publication and mention of the grant of the patent: **14.10.1998**
(21) Application number: 94924724.1
(22) Date of filing: 07.07.1994
(51) Int. Cl.: C08L 25/04, C08K 13/02

(54) **PROCESS FOR STABILISING STYRENE-CONTAINING RECYCLED PLASTIC MATERIALS AND STABILISER MIXTURES THEREFOR**
VERFAHREN ZUR STABILISIERUNG VON STYROLHALTIGEM RECYKLISIERTEM PLASTIKMATERIAL UND STABILISATORMISCHUNGEN HIERFÜR
PROCEDE DE STABILISATION DE MATIERES PLASTIQUES RECYCLEES CONTENANT DU STYRENE ET MELANGES STABILISATEURS ASSOCIES

(30) Priority: 15.07.1993 CH 2135/93; 10.02.1994 CH 404/94
(43) Date of publication of application: 01.05.1996
(73) Proprietor: Ciba Specialty Chemicals Holding Inc., 4057 Basel (CH)
(72) Inventor: HOFFMANN, Kurt, D-64686 Lautertal 1 (DE); HERBST, Heinz, D-64686 Lautertal-Reichenbach (DE); PFAENDNER, Rudolf, D-64668 Rimbach/Odenwald 1 (DE); SITEK, Franciszek, CH-4106 Therwil (CH)
(86) International application number: EP9402234
(87) International publication number: WO9502639

(56) References cited:
- EP-A- 0 064 343
- EP-A- 0 506 614
- WO-A-94/07951

## Description

The present invention relates to a process for stabilising recycled plastic materials containing styrene or α-methylstyrene occurring mainly in the domestic, commercial or industrial sectors and in useful material collections, and to the stabiliser mixtures useful therefor.

The recycling of waste materials is a problem of increasing importance for ecological reasons. The recycling of paper, textiles, glass and metals is already being carried out on a large scale, whether through separate collection or by sorting waste. The reuse of waste plastics is basically also possible, provided the waste consists mainly of thermoplastic polymers. The styrene-containing waste plastics occurring in the domestic, commercial or industrial sector, or waste plastics or scrap material originating from collections or from obligatory returnables in specific sectors of industry, as for example in the automotive, electrical and packaging industries, may be styrene homopolymers such as PS, CPS or EPS, as well as copolymers such as IPS, HIPS, SBS, SB, SEBS, SIS, ABS, ASA, SAN and MBS or mixtures thereof.

Hitherto it has been possible to use plastic recyclates only for purposes for which relatively low demands are made of the material properties, typically for use as fillers or for utilities in which thick-walled parts can be used, for example sound-insulating walls.

EP-A-0 506 614 discloses a process for stabilizing recycled plastic material by means of at least one hindered phenol and at least one phosphonic or phosphorous acid ester.

Uniform recycled waste plastics may occur as production waste (punch waste, shavings) or in separately recovered waste materials (e.g. EPS collections). The difficulty of finding suitable stabilisers resides here especially in the nature of the degradation that has occurred over an extended period of time or also that may be caused by brief mechanical stress as during processing (agglomeration, compacting).

It has now been found that recycled styrene-containing plastics can be stabilised against thermo-oxidative degradation in simple and economic manner with a mixture of per se known stabilisers and hence reprocessed to useful products.

Specifically, the invention relates to a process for stabilising recycled styrene-containing plastic materials that can be recovered from commercial and industrial waste, which process comprises incorporating in said plastic materials 0.01 to 10 % by weight of a mixture of a) at least one sterically hindered phenol and b) at least one inorganic compound selected from the series of the metal oxides, metal hydroxides or metal carbonates, with the proviso that no organic phosphite or phosphonite is present.

A preferred weight ratio of a:b is from 20:1 to 1:20, more particularly from 10:1 to 1:10 and, most preferably, from 1:1 to 1:5.

The styrene-containing plastics to be stabilised are conveniently punch wastes from foamed PS (packing material) or ABS waste from casings (electrical/electronic) and automotive utilities, flame-proofed polystyrenes, blends and mixtures with virgin material. Examples of the recycled plastic material are EPS, CPS, PS, SBS, SB, SEBS, SIS, ABS, ASA, SAN and MBS. Illustrative examples of suitable polystyrene-containing blends are PC/ABS, PBT/ABS, PBT/ASA or ABS/ASA. Suitable plastics to be stabilized have a styrene content of more than 5 % by weight, preferably more than 10 % by weight.

It is preferred to incorporate 0.01 to 5 % by weight, most preferably 0.02 to 2 % by weight, of the mixture of a and b in the recyclate.

The sterically hindered phenols used as component a) are known stabilisers for protecting plastics, especially polyolefins, against thermo-oxidative ageing. These compounds preferably contain at least one group of formula (I) 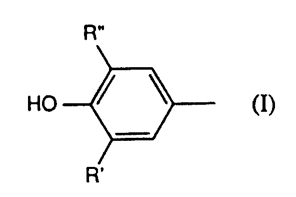 wherein R' is hydrogen, methyl or tert-butyl, and R" is unsubstituted or substituted alkyl or substituted alkylthioalkyl.

Representative examples of such sterically hindered phenols are:
2,6-di-tert-butyl-4-methylphenol, 2-tert-butyl-4,6-dimethylphenol, 2,6-di-tert-butyl-4-ethylphenol, 2,6-di-tert-butyl-4-n-butylphenol, 2,6-di-tert-butyl-4-isobutylphenol, 2,6-dicyclopentyl-4-methylphenol, 2-(α-methylcyclohexyl)-4,6-dimethylphenol, 2,6-dioctadecyl-4-methylphenol, 2,4,6-tricyclohexylphenol, 2,6-di-tert-butyl-4-methoxymethylphenol, 2,6-dinonyl-4-methylphenol, 2,6-di-tert-butyl-4-methoxyphenol, 2,5-di-tert-butylhydroquinone, 2,5-di-tert-amyl-hydroquinone, 2,6-diphenyl-4-octadecyloxyphenol, 2,2'-thiobis(6-tert-butyl-4-methylphenol), 2,2'-thiobis(4-octylphenol), 4,4'-thiobis(6-tert-butyl-3-methylphenol), 4,4'-thiobis(6-tert-butyl-2-methylphenol), 2,2'-methylenebis(6-tert-butyl-4-methylphenol), 2,2'-methylenebis(6-tert-butyl-4-ethylphenol), 2,2'-methylenebis[4-methyl-6-(α-methylcyclohexyl)phenol], 2,2'-methylenebis-(4-methyl-6-cyclohexylphenol), 2,2'-methylenebis(6-nonyl-4-methylphenol), 2,2'-methylenebis(4,6-di-tert-butylphenol), 2,2'-ethylidenebis(4,6-di-tert-butylphenol), 2,2'-ethylidenebis(6-tert-butyl-4-isobutylphenol), 2,2'-methylenebis[6-(α-methylbenzyl)-4-nonylphenol], 2,2'-methylenebis[6-(α,α-dimethylbenzyl)-4-nonylphenol], 4,4'-methylenebis(2,6-di-tert-butylphenol), 4,4'-methylenebis(6-tert-butyl-2-methylphenol), 1,1-bis(5-tert-butyl-4-hydroxy-2-methylphenyl)butane, 2,6-bis(3-tert-butyl-5-methyl-2-hydroxybenzyl)-4-methylphenol, 1,1,3-tris(5-tert-butyl-4-hydroxy-2-methylphenyl)butane, 1,1-bis(5-tert-butyl-4-hydroxy-2-methylphenyl)-3-n-dodecylmercaptobutane, ethylene glycol bis[3,3-bis(3'-tert-butyl-4'-hydroxyphenyl)butyrate], bis(3-tert-butyl-4-hydroxy-5-methylphenyl)dicyclopentadiene, bis[2-(3'-tert-butyl-2'-hydroxy-5'-methylbenzyl)-6-tert-butyl-4-methylphenyl]terephthalate, 1,3,5-tris(3,5-di-tert-butyl-4-hydroxybenzyl)-2,4,6-trimethylbenzene, bis(3,5-di-tert-butyl-4-hydroxybenzyl)sulfide, isooctyl 3,5-di-tert-butyl-4-hydroxybenzylmercaptoacetate, bis(4-tert-butyl-3-hydroxy-2,6-dimethylbenzyl)dithiolterephthalate, 1,3,5-tris-(3,5-di-tert-butyl-4-hydroxybenzyl)isocyanurate, 1,3,5-tris(4-tert-butyl-3-hydroxy-2,6-dimethylbenzyl)isocyanurate, dioctadecyl 3,5-di-tert-butyl-4-hydroxybenzylphosphonate, and the calcium salt of monoethyl 3,5-di-tert-butyl-4-hydroxybenzylphosphonate, as well as compounds derived from tocopherol.

Especially preferred sterically hindered phenols suitable for use as component a) are the esters of β-(3,5-di-tert-butyl-4-hydroxyphenyl)propionic acid and of β-(5-tert-butyl-4-hydroxy-3-methylphenyl)propionic acid with monohydric or polyhydric alcohols, as with methanol, octanol, octadecanol, 1,6-hexanediol, neopentyl glycol, thiodiethylene glycol, diethylene glycol, triethylene glycol, pentaerythritol, tris(hydroxyethyl) isocyanurate, N,N'-bis(hydroxyethyl)oxamide, and the amides of these acids, for example N,N'-bis(3,5-di-tert-butyl-4-hydroxyphenylpropionyl)-hexamethylenediamine, N,N'-bis(3,5-di-tert-butyl-4-hydroxyphenylpropionyl)trimethylenediamine and N,N'-bis(3,5-di-tert-butyl-4-hydroxyphenylpropionyl)hydrazine.

Further particularly preferred compounds are:
2-(1-(2-hydroxy-3,5-di-tert-pentylphenyl)ethyl-4,6-di-tert-pentylphenylacrylate 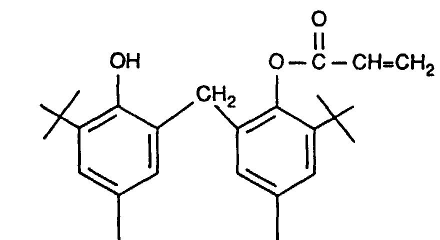 (2-(1,1-dimethylethyl)-6[[3-(1,1-dimethylethyl)-2-hydroxy-5-methylphenyl]-methyl]-4-methylphenyl 2-propenoate}; 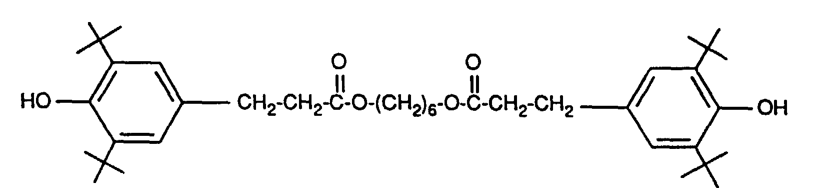 {1,6-hexanediyl 3,5-bis(1,1-dimethylethyl)-4-hydroxyphenylpropanoate}; 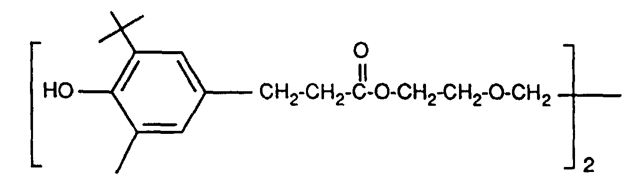 {1,2-ethanediylbis(oxy-2,1-ethanediyl)3-(1,1-dimethylethyl)-4-hydroxy-5-methylphenylpropanoate); 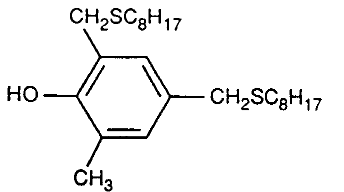 {2-methyl-4,6-bis[(octylthio)methyl]phenol}; 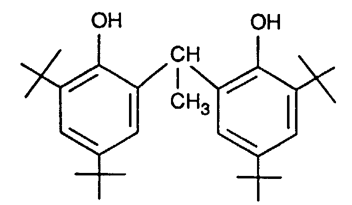 {2,2'-ethylidenebis(4,6-di-tert-butylphenol)}; 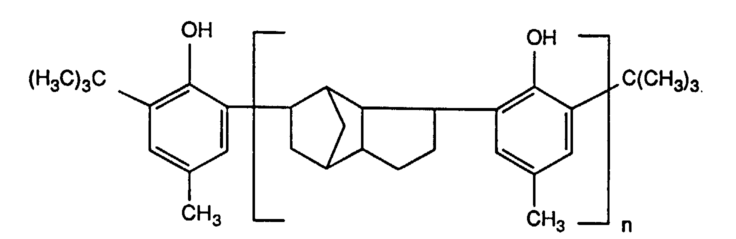 {butylated reaction product of para-cresol and dicyclopentadien (average molecular weight: 600-700)} 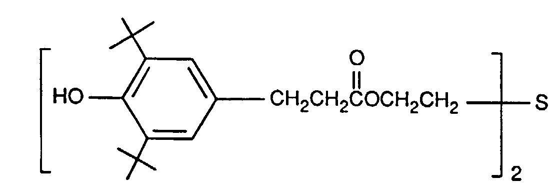 {thiodi-2,1-ethanediyl 3,5-bis(1,1-dimethylethyl)-4-hydroxyphenylpropanoate}; 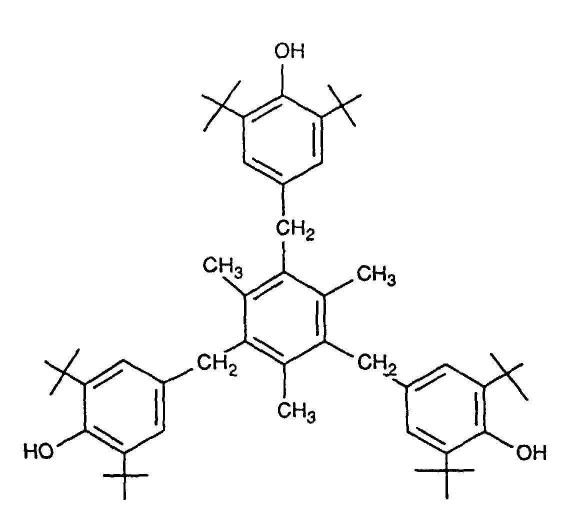 {4,4',4"-[(2,4,6-trimethyl-1,3,5-benzenetriyl)tris-(methylene)]tris[2,6-bis(1,1-dimethylethyl)phenol}; 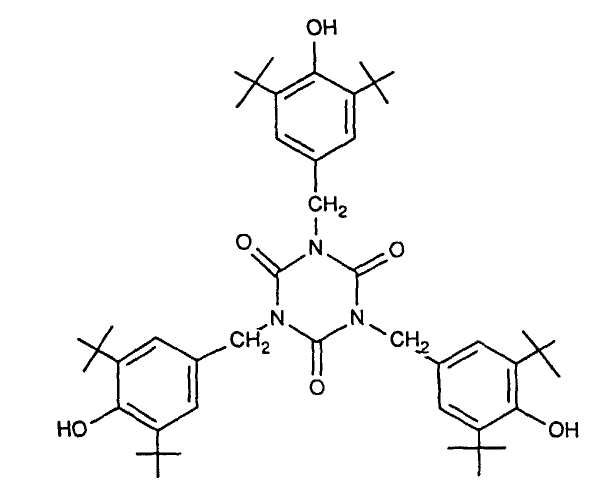 {1,3,5-tris[[3,5-bis(1,1-dimethylethyl)-4-hydroxyphenyl]methyl]-1,3,5-triazine-2,4,6-(1H,3H,5H)trione}.

Component a is most preferably the octadecyl ester of β-(3,5-di-tert-butyl-4-hydroxyphenyl)propionic acid, triethylene glycol bis[3(3-tert-butyl-4-hydroxy-5-methylphenyl)]-propionate, 1,6-hexanediol bis[3(3,5-di-tert-butyl-4-hydroxyphenyl)]propionate and 2,2'-methylenebis(4-methyl-6-tert-butylphenol)monoacrylate.

Component b) is an inorganic compound selected from the series of the metal oxides, metal hydroxides or metal carbonates.

Preferably component b) is selected from the metal oxides, metal hydroxides or metal carbonates of the elements of main group II and subsidiary groups IV and VII, the oxides being particularly preferred, typically MgO, MnO₂, ZnO and, most preferably, CaO.

A mixture of different components b) may also be used. For example, component b) may be a mixture of calcium oxide and calcium carbonate.

A metal hydroxide is typically magnesium hydroxide and a metal carbonate is typically calcium carbonate. Salts with different anions may also be used, for example magnesium aluminium hydroxycarbonates, so-called hydrotalcites.

It is further useful to add a metal salt of a fatty acid, the metal being preferably an element of main or subsidiary group II or tin.

These metal salts are preferably zinc, magnesium, tin or, more particularly, calcium salts selected from the series of the aliphatic saturated C₂-C₂₂carboxylates, of the aliphatic olefinic C₃-C₂₂carboxylates, of the aliphatic C₂-C₂₂carboxylates which are substituted by at least one OH group, of the cyclic or bicyclic C₅-C₂₂carboxylates, of the aromatic C₇-C₂₂carboxylates, of the aromatic C₇-C₂₂carboxylates which are substituted by at least one OH group, of the C₁-C₁₆alkyl-substituted phenylcarboxylates and of the phenyl-C₁-C₁₆alkylcarboxylates, of which the stearates and laurates, lactates, 2-ethylhexanoates and behenates are preferred.

Metal salts of fatty acids such as calcium stearate, zinc stearate and magnesium stearate, are very particularly preferred.

It is also possible to use a mixture of different above mentioned components. For example, a mixture of calcium laurate and calcium stearate or of zinc stearate and calcium stearate may be used.

A metal salt of a fatty acid is usually added in a ratio of 10:1 to 1:10, based on the ratio of (a+b):metal salt.

The invention further relates to stabiliser mixtures and to the use thereof for recycled styrene-containing thermoplastic materials recovered from domestic, commercial or industrial waste or from useful material collections and scrap plastic materials, which mixtures comprise a) at least one sterically hindered phenol, b) at least one inorganic compound selected from the series of the metal oxides, metal hydroxides or metal carbonates, and as optional component c), a metal salt of a fatty acid, with the proviso that no organic phosphite or phosphonite is present.

Very particularly preferred stabiliser mixtures comprise, in 100 parts,
(A) as component a) 5-90 parts of triethylene glycol bis[3(3-tert-butyl-4-hydroxy-5-methylphenyl)]propionate, as component b) 10-95 parts of calcium oxide;
(B) as component a) 5-90 parts of the octadecyl ester of β-(3,5-di-tert-butyl-4-hydroxyphenyl)propionic acid, as component b) 10-95 parts of calcium oxide; or
(C) as component a) 5-90 parts of triethylene glycol bis[3(3-tert.butyl-4-hydroxy-5-methylphenyl)]propionate, as component b) 5-90 parts of calcium oxide, and as component c) 5-90 parts of calcium stearate.

The invention further relates to recycled styrene-containing thermoplastic materials recovered from domestic, commercial or industrial waste or from useful material collections and scrap plastic materials, which materials comprise a) at least one sterically hindered phenol, b) at least one inorganic compound selected from the series of the metal oxides, metal hydroxides or metal carbonates, and as optional component c), at least one metal salt of a fatty acid, with the proviso that no organic phosphite or phosphonite is present.

Preferred recycled styrene-containing thermoplastic materials, preferred stabiliser mixtures and the use thereof correspond in their components and mixture ratios to the preferred embodiments discussed in detail in connection with the process.

The addition of these combinations to the recyclate makes it possible to carry out the thermoplastic processing with reduced degradation and/or prolongs the life of the materials fabricated from the recyclate.

The stabilising action of the mixture of components a) and b), especially the processing stability and long-term stability, may be synergistically enhanced by the addition of so-called thiosynergists. These are thioethers, preferably thioesters, of thiodipropionic acid. Typical examples are the lauryl, stearyl, myristyl or tridecyl esters of thiodipropionic acid or distearyl disulfide. These thiosynergists are preferably added in an amount of 0.1 to 1 % by weight, based on the recyclate.

Further suitable stabilisers of the series of the lactates, e.g. calcium lactate, calcium stearoyl-2-lactate, or lactones such as 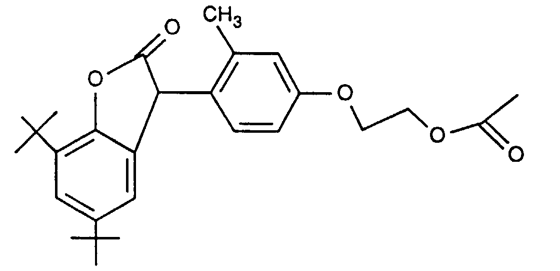 can likewise be used.

If the object fabricated from the recycled plastics material is also required to have superior light stability, then it is advisable to add one or more light stabilisers, most suitably those of the series of the benzophenones, benzotriazoles, oxalanilides and the sterically hindered amines. Representative examples of such compounds are:

2-Hydroxybenzophenones, for example the 4-hydroxy, 4-methoxy, 4-octyloxy, 4-decyloxy, 4-dodecyloxy, 4-benzyloxy, 4,2',4'-trihydroxy, 2'-hydroxy-4,4'-dimethoxy derivative.

2-(2'-Hydroxyphenyl)benzotriazoles, for example the 5'-methyl, 3',5'-di-tert-butyl, 5'-tert-butyl, 5'-(1,1,3,3-tetramethylbutyl), 5-chloro-3',5'-di-tert-butyl, 5-chloro-3'-tert-butyl-5'-methyl, 3'-sec-butyl-5'-tert-butyl, 4'-octyloxy, 3',5'-di-tert-amyl, 3',5'-bis(α,α-dimethylbenzyl) derivative.

Oxamides, for example 4,4'-dioctyloxyoxanilide, 2,2'-dioctyloxy-5,5'-di-tert-butoxanilide, 2,2'-didodecyloxy-5,5'-di-tert-butoxanilide, 2-ethoxy-2'-ethyl-oxanilide, N,N'-bis(3-dimethylaminopropyl)oxamide, 2-ethoxy-5-tert-butyl-2'-ethoxanilide and its mixture with 2-ethoxy-2'-ethyl-5,4'-di-tert-butoxanilide, mixtures of o- and p-methoxy-substituted oxanilides as well as of o- and p-ethoxy-disubstituted oxanilides.

Sterically hindered amines, for example bis(2,2,6,6-tetramethylpiperidyl) sebacate, bis(1,2,2,6,6-pentamethylpiperidyl) sebacate, bis(1-octyloxy-2,2,6,6-tetramethyl-4-piperidyl) sebacate, the bis(1,2,2,6,6-pentamethylpiperidyl) ester of n-butyl-3,5-di-tert-butyl-4-hydroxybenzylmalonic acid, the condensate of 1-hydroxyethyl-2,2,6,6-tetramethyl-4-hydroxypiperidine and succinic acid, the condensate of N,N'-bis(2,2,6,6-tetramethyl-4-piperidyl)hexamethylenediamine and 4-tert-octylamino-2,6-dichloro-1,3,5-s-triazine or 4-morpholino-2,6-dichloro-1,3,5-triazine, tetrakis(2,2,6,6-tetramethyl-4-piperidyl)-1,2,3,4-butanetetraoate, bis(2,2,6,6-tetramethylpiperidyl) succinate, N-(1,2,2,6,6-pentamethyl-4-piperidyl)-α-dodecylsuccinimide, N-(2,2,6,6-tetramethyl-4-piperidyl)-α-dodecylsuccinimide, 2,4,6-tris[N-pentyl-2-(3,3,5,5-tetramethyl-2-oxopiperazino)ethylamino]-1,3,5-triazine, 2,2,4,4-tetramethyl-7-oxa-3,20-diaza-21-oxo-dispiro[5,1,11,2]heneicosane, 2,2,4,4-tetramethyl-20-(2-dodecyloxycarbonylethyl)-7-oxa-3,20-diaza-21-oxo-dispiro[5,1,11,2]heneicosane, 8-acetyl-3-dodecyl-1,3,8-triaza-7,7,9,9-tetramethylspiro[4,5]decane-2,4-dione, 1,5,8,12-tetrakis[2,4-bis(N-butyl-1,2,2,6,6-pentamethyl-4-piperidylamino)-1,3,5-triazin-6-yl]-1,5,8,12-tetraazadodecane as well as polysiloxanes which contain 2,2,6,6-tetramethyl-4-piperidinyl groups.

The light stabilisers are preferably incorporated in an amount of 0.01 to 2 % by weight, more particularly 0.05 to 1 % by weight, based on the plastic material. The preferred light stabiliser is a benzotriazole or a sterically hindered amine or a combination thereof.

If necessary, further customary additives for plastics can be incorporated in the recycled stryrene-containing plastic material, conveniently fillers such as wood flour or mica, reinforcing agents such as glass fibres, glass beads or mineral fibres, pigments, plasticisers, lubricants, flame retardants, antistatic agents or blowing agents. Such additives will depend on the envisaged use of the recyclate.

The stabilised recyclates can be used for a wide variety of purposes, typically for profiles, sheets, films, structural components, vehicle components and machine parts, and containers of all kinds, typically bottles, foamed materials such as sound-insulating boards or packaging material.

The recyclate can also be used in admixture with type-specific virgin plastics or together with type-specific virgin plastics, for example in a co-extrusion process.

The following Examples illustrate the inventive process and the stabiliser mixture in more detail. Unless otherwise indicated, parts and percentages are by weight.

### Examples 1 to 17 (Tables 1-3)

### Stabilisation of flame-proofed, foamed waste polystyrene

For ease of processing, the foamed material was compacted by heating under vacuum for 1 h to 100°C. The compacted material was milled. The flame-proofed waste polystyrene has a bromine content of c. 0.5 %. Sample 1 and sample 2 are two different batches.

46 g of the EPS recyclate are kneaded for 10 minutes in a Brabender W 50 mixing chamber heated to 220°C (40 rpm). The additives (Tables 1-3) are added to the mixing chamber right at the start together with the plastics mixture. Mixing is stopped after 10 min, the polymer blend is removed from the mixing chamber and premoulded at 30°C/c. 50 KN for 1 min.

2 mm thick pressed sheets are fabricated from this moulding at 200°C/50 KN and the melt volume index (DIN 53 735; ISO 1133/12; 200°C/5 kg) is determined after comminution.

An analogous procedure is followed in the comparison Examples.

**Table 1:**

| Brabender experiment (20 min, 220°C, 40 rpm) with flame-proofed EPS (compacted, sample 1) | | | | |
|---|---|---|---|---|
| | % | Additive | MVI | YI |
| comparison | - | none | 98.1 | 83.9 |
| comparison | 0.20 | AO-1 | 64.0 | 80.5 |
| Example 1 | 0.15/0.5 | AO-1/M-1 | 47.4 | 31.1 |
| Example 2 | 0.05/0.15 | AO-1/M-1 | 48.3 | 27.8 |
| YI: according to ASTM D 1925-70 (DIN 5033) | | | | |

**Table 2:**

| Brabender experiment (20 min, 220°C, 40 rpm) with flame-proofed EPS (compacted, sample1) | | | | |
|---|---|---|---|---|
| | % | Additive | MVI | YI |
| comparison | - | none | 98.1 | 83.9 |
| comparison | 0.20 | AO-3 | 60.6 | 70.6 |
| Example 3 | 0.15 / 0.5 | AO-3 / M-1 | 39.5 | 32.8 |
| Example 4 | 0.10 / 0.10 | AO-3/M-1 | 52.7 | 26.1 |
| Example 5 | 0.05/0.15 | AO-3/M-1 | 51.2 | 28.8 |
| Example 6 | 0.15/0.15 | AO-3 / M-1 | 43.4 | 34.3 |
| Example 7 | 0.10/0.075/0.025 | AO-3/M-1/F-1 | 47.4 | 30.7 |
| Example 8 | 0.10/0.5/0.5 | AO-3/M-1/F-1 | 46.1 | 30.9 |
| Example 9 | 0.10/0.025 0.075 | AO-3/M-1/F-1 | 47.6 | 34.1 |
| YI: according to ASTM D 1925-70 (DIN 5033) | | | | |

**Table 3:**

| Brabender experiment (20 min, 220°C, 40 rpm) with flame-proofed EPS (compacted, sample 2) | | | |
|---|---|---|---|
| | % | Additive | MVI |
| comparison | - | none | 146.2 |
| comparison | 0.20 | AO-2 | 103.1 |
| comparison | 0.30 | AO-2 | 106.8 |
| Example 10 | 0.150/0.050 | AO-2/M-1 | 87.0 |
| Example 11 | 0.125/0.075 | AO-2/M-1 | 80.5 |
| Example 12 | 0.10/0.10 | AO-2/M-1 | 82.1 |
| Example 13 | 0.20/0.10 | AO-2 / M-1 | 76.4 |
| Example 14 | 0.25/0.10 | AO-2/M-1 | 63.0 |
| Example 15 | 0.30/0.10 | AO-2/M-1 | 60.0 |
| Example 16 | 0.20/0.05/0.05 | AO-2/M-1/F-1 | 60.9 |
| Example 17 | 0.30/0.05/0.05 | AO-2/M-1/F-1 | 55.0 |

The stabilised samples exhibit a lower MVI value and a diminished discolouration expressed by the YI value than in the comparison Examples.

### Examples 18-20 (Table 4)

### Stabilisation of polystyrene recyclate (EPS recyclate) from packaging materials

45 g of the compacted EPS are kneaded for 10 minutes in a Brabender W 50 mixing chamber heated to 220°C (46 rpm). The additives (Table 4) are added to the mixing chamber right at the start together with the plastics mixture. Mixing is stopped after 10 min, the polymer blend is removed from the mixing chamber and premoulded at 30°C/c. 50 KN for 1 min.

2 mm thick pressed sheets are fabricated from this moulding at 200°C/50 KN and the melt volume index (DIN 53 735; ISO 1133/12; 200°C/5 kg) is determined after comminution.

An analogous procedure is followed in the comparison Examples.

**Table 4:**

| Mixing chamber (20 min, 220°C, 46 rpm) with recyclate from EPS packing material (granulate) | | | |
|---|---|---|---|
| | % | Additive | MVI |
| comparison | - | none | 44.9 |
| comparison | 0.1 | AO-3 | 32.1 |
| comparison | 0.1 | M-1 | 33.8 |
| Example 18 | 0.05/0.05 | AO-3 / M-1 | 30.4 |
| Example 19 | 0.025/0.075 | AO-3/M-1 | 31.9 |
| Example 20 | 0.05/0.04/0.01 | AO-3/M-1/F-1 | 31.8 |

The stabilised samples exhibit a lower MVI value than in the comparison Examples.

### Example 21 (Table 5)

### Stabilisation of waste polystyrene (impact-modified)

48 g of the IPS recyclate from packaging material (yoghurt beakers) are kneaded for 10 minutes in a Brabender W 50 mixing chamber heated to 220°C (46 rpm). The additives (Table 5) are added to the mixing chamber right at the start together with the plastics mixture. Mixing is stopped after 10 min, the polymer blend is removed from the mixing chamber and premoulded at 30°C/c. 50 KN for 1 min.

2 mm thick pressed sheets are fabricated from this moulding at 200°C/50 KN and from these sheets dumbbells are punched. These dumbbells are aged at 80°C in a circulating air oven. Samples are taken from the oven at defined intervals of time and investigated for the degree of yellowing (Table 5).

An analogous procedure is followed in the comparison Examples.

**Table 5**

| Oven ageing of samples of waste IPS (yoghurt beakers) at 80°C 10 min in the mixing chamber at 220°C, 46 rpm, 2 mm pressed sheet | | | |
|---|---|---|---|
| Additive | Comparison 1 no additive | Comparison 2 0.05% AO-3 | Example 21 0.05% AO-3 / 0.05% M-1 |
| Oven ageing [h] | YI | YI | YI |
| 0 | -0.5 | -0.5 | -0.6 |
| 197 | 0.6 | --- | --- |
| 408 | 5.7 | --- | -0.5 |
| 504 | --- | 0.9 | --- |
| 601 | 9.7 | --- | 0.3 |
| 720 | --- | 2.6 | --- |
| 800 | 13.7 | --- | 1.5 |
| 935 | --- | 4.0 | --- |
| 1007 | 16.1 | | 1.7 |

The stabilised samples exhibit a substantially diminished increase in yellowing than the samples in the comparison Examples.

### Examples 22-26:

In a mixer, granular foamed polystyrene recyclate (EPS recyclate) from packaging material is homogenised with the stabilisers (Table 6) and then extruded three times in succession on a twin-screw kneader (220°C). Before extrusion and after each extrusion, the melt volume index is determined (MVI; 200°C; 5 kg) according to DIN 53 735 (ISO 1133/12).

**Table 6:**

| | Stabiliser mixture | MVI after | | | |
|---|---|---|---|---|---|
| | | 0 | 1 | 2 | 3 extrusions |
| -- | without stabiliser | 23.2 | 25.8 | 26.3 | 26.9 |
| Ex. 22 | 0.15 % AO-2 + 0.1 % M-1 | 23.0 | 23.7 | 23.9 | 24.1 |
| Ex. 23 | 0.2 % AO-2 + 0.1 % M-1 | 23.0 | 24.2 | 23.3 | 24.2 |
| Ex. 24 | 0.1 % AO-3 + 0.1 % M-1 | 23.0 | 23.5 | 22.1 | 23.6 |
| Ex. 25 | 0.1 % AO-3 + 0.2 % M-1 | 23.0 | 23.0 | 23.1 | 23.3 |
| Ex. 26 | 0.2 % AO-3 +0.1% M-1 | 23.0 | 23.6 | 23.6 | 24.1 |

The stabilised samples exhibit only an insignificant increase in the MVI value after repeated extrusion, thus indicating very good stabilisation.

### Examples 27 to 29:

A granular EPS recyclate from production waste (Examples 27-30) or from packaging material (Examples 31-39) is kneaded with the stabilisers (Tables 7 and 8) for 10 minutes in a Brabender W 50 mixing chamber heated to 220°C (40 rpm). The polymer blends are removed from the mixing chamber and premoulded at 30°C/c. 20 KN for 1 min and then sheets are fabricated (thickness: 2 mm) at 200°C/50 KN on a press. The melt volume index is determined from the comminuted sheets (MVI; 200°C; 5 kg) according to DIN 53 735 (ISO 1133/12).

**Table 7:**

| | Stabiliser mixture | MVI (200/5) |
|---|---|---|
| -- | without stabiliser | 44.4 |
| Ex. 27 | 0.2% AO-2 + 0.1 % M-1 | 18.8 |
| Ex. 28 | 0.1 % AO-3 + 0.1 % M-1 | 17.6 |
| Ex. 29 | 0.1 % AO-3 + 0.2 % M-1 | 17.0 |
| Ex. 30 | 0.2 % AO-3 + 0.1 % M-1 | 16.0 |

**Table 8:**

| | Stabiliser mixture | MVI (200/5) |
|---|---|---|
| -- | without stabiliser | 56.8 |
| Ex. 31 | 0.1 % AO-2 + 0.05 % M-1 | 32.3 |
| Ex. 32 | 0.1 % AO-2 + 0.1 % M-1 | 32.9 |
| Ex. 33 | 0.3 % AO-2 + 0.2 % M-1 | 27.5 |
| Ex. 34 | 0.05 % AO-3 + 0.05 % M-1 | 32.7 |
| Ex. 35 | 0.05 % AO-3 + 0.1 % M-1 | 32.3 |
| Ex. 36 | 0.05 % AO-3 + 0.2 % M-1 | 31.9 |
| Ex. 37 | 0.15 % AO-3 + 0.05 % M-1 | 28.2 |
| Ex. 38 | 0.15 % AO-3 + 0.1 % M-1 | 27.6 |
| Ex. 39 | 0.15 % AO-3 + 0.2 % M-1 | 27.4 |

The stabilised samples exhibit a lower MVI value, thus indicating very good stabilisation.

The following stabilisers are used in the foregoing Examples:
AO-1 2,2'-methylenebis(4-methyl-6-tert-butylphenol)monoacrylate
AO-2 octadecyl ester of β-(3,5-di-tert-butyl-4-hydroxyphenyl)propionic acid
AO-3 bis(triethylene glycol) ester of )-(3-ten-butyl-4-hydroxy-5-methylphenyl)propionic acid
M-1 calcium oxide
F-1 calcium stearate

## Claims

1. A process for stabilising recycled styrene-containing plastic materials occurring in domestic, commercial and industrial waste and in useful material collections, which process comprises incorporating in said plastic materials 0.01 to 10 % by weight of a mixture of a) at least one sterically hindered phenol and b) at least one inorganic compound selected from the series of the metal oxides, metal hydroxides or metal carbonates, with the proviso that no organic phosphite or phosphonite is present.

2. A process according to claim 1, wherein the weight ratio of a:b is from 20:1 to 1:20.

3. A process according to claim 1, wherein the weight ratio of a:b is from 10:1 to 1:10.

4. A process according to claim 1, wherein the weight ratio of a:b is from 1:1 to 1:5.

5. A process according to claim 1, wherein a metal salt of a fatty acid is used as further additive.

6. A process according to claim 5, wherein the weight ratio of (a+b):metal salt is from 10:1 to 1:10.

7. A process according to claim 1, wherein the recycled plastic material is a polymer containing styrene or α-methylstyrene.

8. A process according to claim 7, wherein the recycled plastic material is a styrene homopolymer such as EPS, CPS or PS.

9. A process according to claim 7, wherein the recycled plastic material is a styrene copolymer such as SBS, SB, SEBS, SIS, ABS, ASA, SAN or MBS.

10. A process according to claim 7, wherein the recycled plastic is a polystyrene-containing blend such as PC/ABS, PBT/ABS, PBT/ASA or ABS/ASA.

11. A process according to claim 1, wherein 0.01 to 5 % by weight of the mixture of a and b is incorporated in the recycled plastic.

12. A process according to claim 1, wherein 0.02 to 2 % by weight of the mixture of a and b is incorporated in the recycled plastic.

13. A process according to claim 1, wherein component a is a compound that contains at least one group of formula (I) 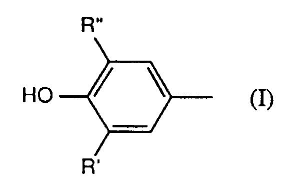 wherein R' is hydrogen, methyl or tert-butyl, and R" is unsubstituted or substituted alkyl or substituted alkylthioalkyl.

14. A process according to claim 1, wherein component a is a compound selected from 2-(1-(2-hydroxy-3,5-di-tert-pentylphenyl)ethyl-4,6-di-tert-pentylphenylacrylate 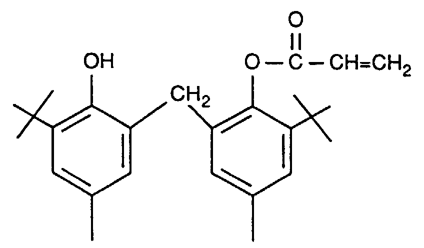 {2-(1,1-dimethylethyl)-6-[[3-(1,1-dimethylethyl)-2-hydroxy-5-methylphenyl]-methyl]-4-methylphenyl 2-propenoate}; 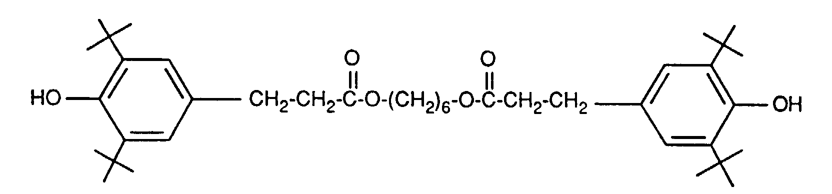 {1,6-hexanediyl 3,5-bis(1,1-dimethyl-ethyl)-4-hydroxyphenylpropanoate}; 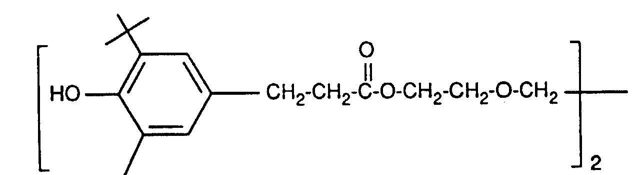 {1,2-ethanediylbis(oxy-2,1-ethanediyl) 3-(1,1-dimethylethyl)4-hydroxy-5-methylphenylpropanoate}; 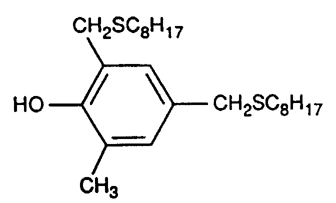 {2-methyl-4,6-bis[(octylthio)methyl]phenol}; 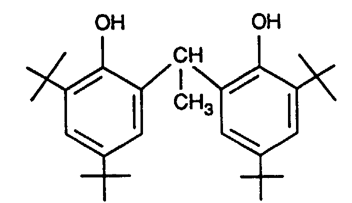 {2,2'-ethylidenebis(4,6-di-tert-butylphenol)}; 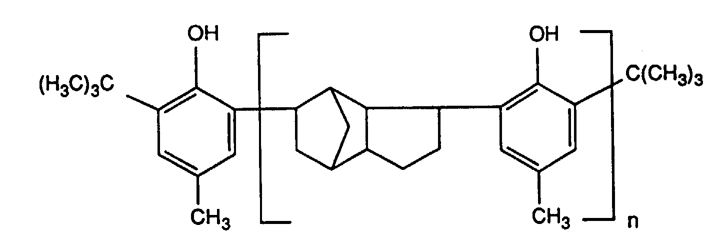 {butylated reaction product of para-cresol and dicyclopentadien (average molecular weight: 600-700)} 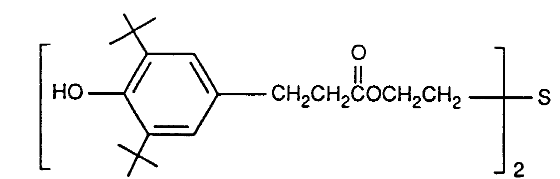 {thiodi-2,1-ethanediyl 3,5-bis(1,1-dimethylethyl)-4-hydroxyphenylpropanoate}; 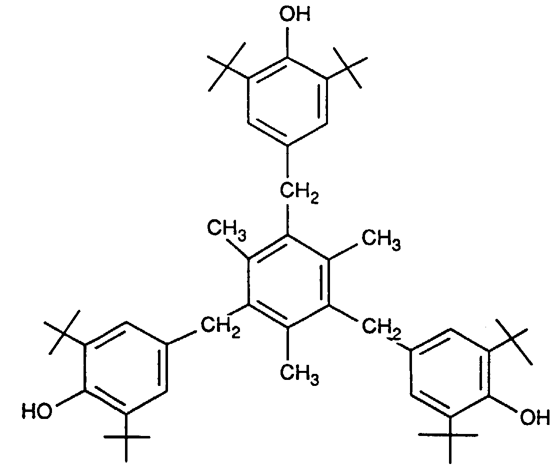 {4,4',4"-[(2,4,6-trimethyl-1,3,5-benzenetriyl)tris-(methylene)]tris[2,6-bis(1,1-dimethylethyl)phenol}; 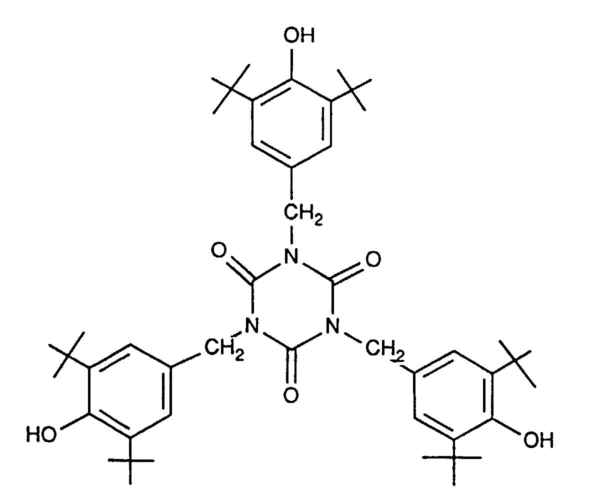 {1,3,5-tris[[3,5-bis(1,1-dimethylethyl)-4-hydroxyphenyl]methyl]-1,3,5-triazine-2,4,6(1H,3H,5H)-trione};
the octadecyl ester of β-(3,5-di-tert-butyl-4-hydroxyphenyl)propionic acid, triethylene glycol bis[3(3-tert-butyl-4-hydroxy-5-methylphenyl)]propionate, 1,6-hexanediol bis[3-(3,5-di-tert-butyl-4-hydroxyphenyl)]propionate and 2,2'-methylenebis(4-methyl-6-tert-butylphenol)monoacrylate.

15. A process according to claim 1, wherein component a) is the octadecyl ester of β-(3,5-di-tert-butyl-4-hydroxyphenyl)propionic acid, triethylene glycol bis[3(3-tert-butyl-4-hydroxy-5-methylphenyl)]propionate, 1,6-hexanediol bis[3(3,5-di-tert-butyl-4-hydroxyphenyl)]propionate and 2,2'-methylenebis(4-methyl-6-tert-butylphenol)monoacrylate.

16. A process according to claim 1, wherein component b) is an inorganic compound selected from the series of the metal oxides.

17. A process according to claim 1, wherein component b) is calcium oxide.

18. A process according to claim 1, wherein a metal salt of a fatty acid is added as additional component, the metal being an element of main or subsidiary group II or tin.

19. A process according to claim 1, wherein a stearate, lactate or laurate of magnesium, tin, zinc or calcium, or a mixture thereof, is used as additional component.

20. A process according to claim 1, wherein calcium stearate or zinc stearate is used as additional component.

21. A process according to claim 1, wherein a thiosynergist selected from the series of the esters of thiodipropionic acid is further added to the plastic recyclate.

22. A process according to claim 1, wherein a thiosynergist selected from the series of the esters thiodipropionic acid is further added to the plastic recyclate in an amount of 0.1 to 1 % by weight, based on said recyclate.

23. A process according to claim 1, wherein at least one light stabiliser selected from the series of the benzophenones, benzotriazoles, oxanilides or sterically hindered amines, or a mixture thereof, is further added to the plastic recyclate.

24. A process according to claim 1, wherein at least one light stabiliser selected from the series of the benzophenones, benzotriazoles, oxanilides or sterically hindered amines, or a mixture thereof, is further added to the plastic recyclate in an amount of 0.01 to 2 % by weight.

25. A process according to claim 1, wherein a light stabiliser selected from the series of the benzotriazoles, or a light stabiliser selected from the series of the sterically hindered amines, is added to the plastic recyclate.

26. A stabiliser mixture for recycled styrene-containing plastic materials recovered from domestic, commercial or industrial waste or from useful material collections, which mixture comprises a) at least one sterically hindered phenol, b) at least one inorganic compound selected from the series of the metal oxides, metal hydroxides or metal carbonates and, as optional component c), a metal salt of a fatty acid, with the proviso that no organic phosphite or phosphonite is present.

27. A stabiliser mixture according to claim 26, comprising in 100 parts
(A) as component a) 5-90 parts of triethylene glycol bis[3(3-tert-butyl-4-hydroxy-5-methylphenyl)]propionate, as component b) 10-95 parts of calcium oxide;
(B) as component a) 5-90 parts of the octadecyl ester of β-(3,5-di-tert-butyl-4-hydroxyphenyl)propionic acid, as component b) 10-95 parts of calcium oxide; or
(C) as component a) 5-90 parts of triethylene glycol bis[3(3-tert.butyl-4-hydroxy-5-methylphenyl)]propionate, as component b) 5-90 parts of calcium oxide, and as component c) 5-90 parts of calcium stearate.

28. Use of a stabiliser mixture which comprises a) at least one sterically hindered phenol, b) at least one inorganic compound selected from the series of the metal oxides. metal hydroxides or metal carbonates and, as optional component c), at least one metal salt of a fatty acid, for stabilising recycled styrene-containing plastic materials recovered from domestic, commercial or industrial waste, with the proviso that no organic phosphite or phosphonite is present.

29. A recycled styrene-containing plastic material recovered from domestic, commercial or industrial waste or from useful material collections, which plastic material comprises a) at least one sterically hindered phenol, b) at least one inorganic compound selected from the series of the metal oxides. metal hydroxides or metal carbonates and, as optional component c), at least one metal salt of a fatty acid, with the proviso that no organic phosphite or phosphonite is present.

## Patentansprüche

1. Verfahren zur Stabilisierung recyclisierter Styrol-enthaltender Kunststoffmaterialien, die in Haushalts-, kommerziellem und industriellem Abfall und in Sammlungen von Nutzstoffen vorkommen, wobei das Verfahren Einarbeiten von 0,01 bis 10 Gew.-% eines Gemisches aus a) mindestens einem sterisch gehinderten Phenol und b) mindestens einer anorganischen Verbindung, ausgewählt aus der Reihe der Metalloxide, Metallhydroxide oder Metallcarbonate, in die Kunststoffmaterialien umfaßt, mit der Maßgabe, daß kein organisches Phosphit oder Phosphonit vorliegt.

2. Verfahren nach Anspruch 1, wobei das Gewichtsverhältnis von a:b 20:1 bis 1:20 ist.

3. Verfahren nach Anspruch 1, wobei das Gewichtsverhältnis von a:b 10:1 bis 1:10 ist.

4. Verfahren nach Anspruch 1, wobei das Gewichtsverhältnis von a:b 1:1 bis 1:5 ist.

5. Verfahren nach Anspruch 1, wobei ein Metallsalz einer Fettsäure als weiteres Additiv verwendet wird.

6. Verfahren nach Anspruch 5, wobei das Gewichtsverhältnis von (a+b):Metallsalz 10:1 bis 1:10 ist.

7. Verfahren nach Anspruch 1, wobei das recyclisierte Kunststoffmaterial bzw. das Kunststoffaltmaterial ein Polymer, das Styrol oder α-Methylstyrol enthält, darstellt.

8. Verfahren nach Anspruch 7, wobei das Kunststoffaltmaterial ein Styrolhomopolymer, wie EPS, CPS oder PS, darstellt.

9. Verfahren nach Anspruch 7, wobei das Kunststoffaltmaterial ein Styrolcopolymer, wie S3S, S3, SEBS, SIS, A3S, ASA, SAN oder MBS, darstellt.

10. Verfahren nach Anspruch 7, wobei das Kunststoffaltmaterial ein Polystyrol-enthaltendes Gemisch, wie PC/ABS, PBT/ABS, PBT/ASA oder ABS/ASA, darstellt.

11. Verfahren nach Anspruch 1, wobei 0,01 bis 5 Gew.- % des Gemisches a und b in das Kunststoffaltmaterial eingearbeitet werden.

12. Verfahren nach Anspruch 1, wobei 0,02 bis 2 Gew.- % des Gemisches a und b in das Kunststoffaltmaterial eingearbeitet werden.

13. Verfahren nach Anspruch 1, wobei Komponente a eine Verbindung ist, die mindestens eine Gruppe der Formel (I) 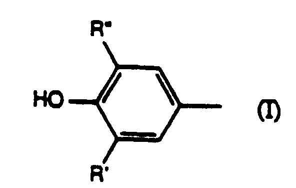 worin R' Wasserstoff, Methyl oder tert-Butyl darstellt und R" eine unsubstituierte oder substituierte Alkyl- oder substituierte Alkylthioalkylgruppe darstellt, enthält.

14. Verfahren nach Anspruch 1, wobei Komponente a eine Verbindung darstellt, ausgewählt aus 2-(1-(2-Hydroxy-3,5-di-tert-pentylphenyl)ethyl-4,6-di-tert-pentylphenylacrylat 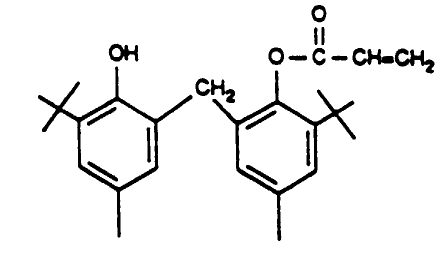 {2-Propensäure-2-(1,1-dimethylethyl)-6-[[3-(1,1-dimethylethyl)-2-hydroxy-5-methylphenyl]-methyl]-4-methylphenyl-ester}; 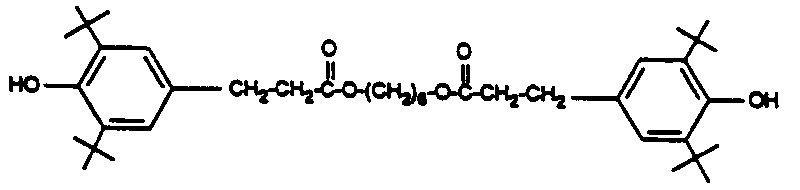 {3,5-Bis(1,1-dimethylethyl)-4-hydroxyphenylpropansäure-1,6-hexandiylester}; 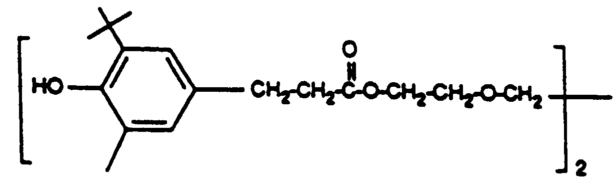 {3-(1,1-Dimethylethyl)-4-hydroxy-5-methylphenylpropansäure-1,2-ethandiylbis(oxy-2,1-ethandiylester)}; 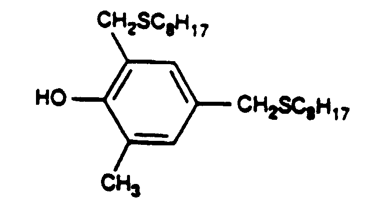 {2-Methyl-4,6-bis[(octylthio)methyl]phenol}; 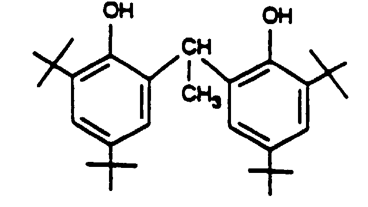 {2,2'-Ethylidenbis(4,6-di-tert-butylphenol)}; 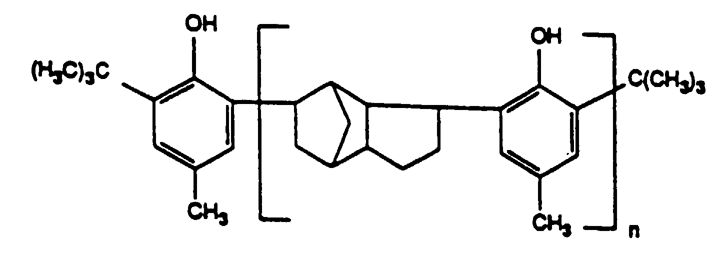 {butyliertes Reaktionsprodukt von para-Cresol und Di-cyclopentadien (mittleres Molekulargewicht: 600-700)} 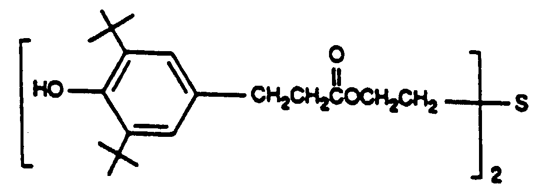 {3,5-Bis(1,1-dimethylethyl)-4-hydroxyphenylpropansäurethiodi-2,1-ethandiylester}; 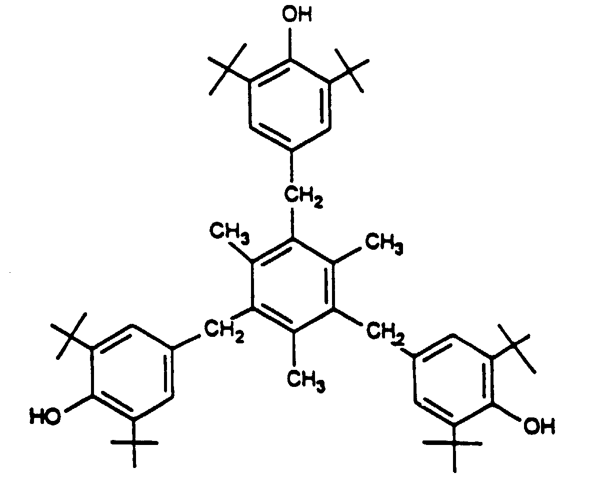 {4,4',4"-[(2,4,6-Trimethyl-1,3,5-benzoltriyl)tris(methylen)]tris[2,6-bis(1,1-dimethylethyl)phenol}; 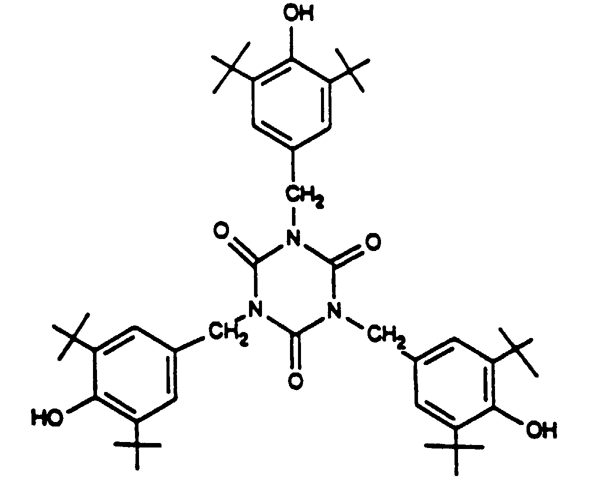 {1,3,5-Tris[[3,5-bis(1,1-dimethylethyl)-4-hydroxyphenyl]methyl]-1,3,5-triazin-2,4,6(1H,3H,5H)-trion};
der Octadecylester von β-(3,5-Di-tert-butyl-4-hydroxyphenyl)propionsäure, Triethylenglycol-bis[3(3-tert-butyl-4-hydroxy-5-methylphenyl)]propionat, 1,6-Hexandiol-bis[3(3,5-di-tert-butyl-4-hydroxyphenyl)]propionat und 2,2'-Methylenbis(4-methyl-6-tert-butylphenol)monoacrylat.

15. Verfahren nach Anspruch 1, wobei Komponente a) der Octadecylester von β-(3,5-Di-tert-butyl-4-hydroxyphenyl)propionsäure, Triethylenglycol-bis[3(3-tert-butyl-4-hydroxy-5-methylphenyl)]propionat, 1,6-Hexandiol-bis[3(3,5-ditert-butyl-4-hydroxyphenyl)]propionat und 2,2'-Methylen-bis-(4-methyl-6-tert-butylphenol)monoacrylat ist.

16. Verfahren nach Anspruch 1, wobei Komponente b) eine anorganische Verbindung, ausgewählt aus der Reihe der Metalloxide, ist.

17. Verfahren nach Anspruch 1, wobei Komponente b) Calciumoxid ist.

18. Verfahren nach Anspruch 1, wobei ein Metallsalz einer Fettsäure als weitere Komponente zugegeben wird, wobei das Metall ein Element der Haupt- oder Nebengruppe II oder Zinn darstellt.

19. Verfahren nach Anspruch 1, wobei ein Stearat, Lactat oder Laurat von Magnesium, Zinn, Zink oder Calcium oder ein Gemisch davon als weitere Komponente verwendet wird.

20. Verfahren nach Anspruch 1, wobei das Calciumstearat oder Zinkstearat als weitere Komponente verwendet wird.

21. Verfahren nach Anspruch 1, wobei ein Thiosynergist, ausgewählt aus der Reihe der Ester von Thiodipropionsäure, weiterhin zu dem Recyclat gegeben wird.

22. Verfahren nach Anspruch 1, wobei ein Thiosynergist, ausgewählt aus der Reihe der Ester von Thiodipropionsäure, weiterhin zu dem Kunststoffaltmaterial in einer Menge von 0,1 bis 1 Gew.-%, basierend auf dem Recyclat, gegeben wird.

23. Verfahren nach Anspruch 1, wobei mindestens ein Lichtstabilisator, ausgewählt aus der Reihe der Benzophenone, Benzotriazole, Oxanilide oder sterisch gehinderten Amine, oder einem Gemisch davon weiterhin zu dem Recyclat gegeben wird.

24. Verfahren nach Anspruch 1, wobei mindestens ein Lichtstabilisator, ausgewählt aus der Reihe der Benzophenone, Benzotriazole, Oxanilide oder sterisch gehinderten Amine, oder einem Gemisch davon weiterhin zu dem Recyclat in einer Menge von 0,01 bis 2 Gew.-% gegeben wird.

25. Verfahren nach Anspruch 1, wobei ein Lichtstabilisator, ausgewählt aus der Reihe der Benzotriazole, oder ein Lichtstabilisator, ausgewählt aus der Reihe der sterisch gehinderten Amine, zu dem Recyclat gegeben wird.

26. Stabilisatorgemisch für recyclisierte Styrol-enthaltende Kunststoffmaterialien, gewonnen aus Haushalts-, kommerziellem oder industriellem Abfall oder Sammlungen von Nutzstoffen, wobei das Gemisch umfaßt a) mindestens ein sterisch gehindertes Phenol, b) mindestens eine anorganische Verbindung, ausgewählt aus der Reihe der Metalloxide, Metallhydroxide oder Metallcarbonate, und als gegebenenfalls vorliegende Komponente c), ein Metallsalz einer Fettsäure, mit der Maßgabe, daß kein organisches Phosphit oder Phosphonit vorliegt.

27. Stabilisatorgemisch nach Anspruch 26, umfassend in 100 Teilen
(A) als Komponente a) 5-90 Teile Triethylenglycolbis[3(3-tert-butyl-4-hydroxy-5-methylphenyl)]propionat, als Komponente b) 10-95 Teile Calciumoxid;
(B) als Komponente a) 5-90 Teile des Octadecylesters von β-(3,5-Di-tert-butyl-4-hydroxyphenyl)propionsäure, als Komponente b) 10-95 Teile Calciumoxid oder
(C) als Komponente a) 5-90 Teile Triethylenglycolbis[3(3-tert-butyl-4-hydroxy-5-methylphenyl)]propionat, als Komponente b) 5-90 Teile Calciumoxid und als Komponente c) 5-90 Teile Calciumstearat.

28. Verwendung eines Stabilisatorgemisches, das umfaßt a) mindestens ein sterisch gehindertes Phenol, b) mindestens eine anorganische Verbindung, ausgewählt aus der Reihe der Metalloxide, Metallhydroxide oder Metallcarbonate, und als gegebenenfalls vorliegende Komponente c) mindestens ein Metallsalz einer Fettsäure zum Stabilisieren von recyclisierten Styrol-enthaltenden Kunststoffmaterialien, die aus Haushalts-, kommerziellem oder industriellem Abfall gewonnen werden, mit der Maßgabe, daß kein organisches Phosphit oder Phosphonit vorliegt.

29. Recyclisiertes Styrol-enthaltendes Kunststoffmaterial, gewonnen aus Haushalts-, kommerziellem oder industriellem Abfall, oder aus Sammlungen von Nutzstoffen, wobei das Kunststoffmaterial umfaßt a) mindestens ein sterisch gehindertes Phenol, b) mindestens eine anorganische Verbindung, ausgewählt aus der Reihe der Metalloxide, Metallhydroxide oder Metallcarbonate, und als gegebenenfalls vorliegende Komponente c) mindestens ein Metallsalz einer Fettsäure, mit der Maßgabe, daß kein organisches Phosphit oder Phosphonit vorliegt.

## Revendications

1. Un procédé pour stabiliser des matières plastiques recyclées contenant du styrène qui se trouvent dans des déchets domestiques, commerciaux et industriels et dans des collectes de matières utiles, lequel procédé consiste à incorporer dans lesdites matières plastiques 0,01 à 10 % en poids d'un mélange de a) au moins un phénol à empêchement stérique et b) au moins un composé minéral choisi dans la série des oxydes métalliques, des hydroxydes métalliques ou des carbonates métalliques, à condition qu'aucun phosphite ou phosphonite organique ne soit présent.

2. Un procédé selon la revendication 1, dans lequel le rapport en poids a:b est de 20:1 à 1:20.

3. Un procédé selon la revendication 1, dans lequel le rapport en poids a:b est de 10:1 à 1:10.

4. Un procédé selon la revendication 1, dans lequel le rapport en poids a:b est de 1:1 à 1:5.

5. Un procédé selon la revendication 1, dans lequel un sel métallique d'un acide gras est utilisé comme additif supplémentaire.

6. Un procédé selon la revendication 5, dans lequel le rapport en poids (a+b):sel métallique est de 10:1 à 1:10.

7. Un procédé selon la revendication 1, dans lequel la matière plastique recyclée est un polymère contenant du styrène ou du α-méthylstyrène.

8. Un procédé selon la revendication 7, dans lequel la matière plastique recyclée est un homopolymère de styrène tel que EPS, CPS ou PS.

9. Un procédé selon la revendication 7, dans lequel la matière plastique recyclée est un copolymère de styrène tel que SBS, SB, SEBS, SIS, ABS, ASA, SAN ou MBS.

10. Un procédé selon la revendication 7, dans lequel la matière plastique recyclée est un mélange contenant du polystyrène tel que PC/ABS, PBT/ABS, PBT/ASA ou ABS/ASA.

11. Un procédé selon la revendication 1, dans lequel le mélange de a et b est incorporé en une proportion de 0,01 à 5 % en poids dans la matière plastique recyclée.

12. Un procédé selon la revendication 1, dans lequel le mélange de a et b est incorporé en une proportion de 0,02 à 2 % en poids dans la matière plastique recyclée.

13. Un procédé selon la revendication 1, dans lequel le composant a est un composé qui contient au moins un groupe de formule (I) 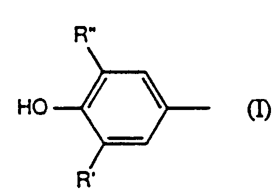 où R' est de l'hydrogène, un groupe méthyle ou un groupe *tert*-butyle, et R" est un groupe alkyle non substitué ou substitué ou un groupe alkylthioalkyle substitué.

14. Un procédé selon la revendication 1, dans lequel le composant a est un composé choisi parmi les suivants :
acrylate de 2-[1-(2-hydroxy-3,5-di-*tert*-pentylphényl)éthyl]-4,6-di-*tert*-pentylphényle ; 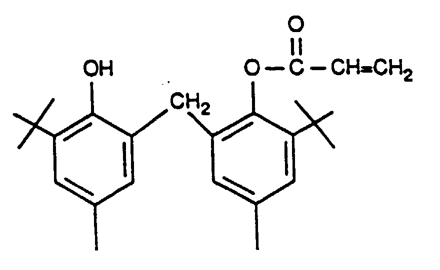 {2-propénoate de 2-(1,1-diméthyléthyl)-6-[[3-(1,1-diméthyléthyl)-2-hydroxy-5-méthylphényl]méthyl]-4-méthylphényle} ; 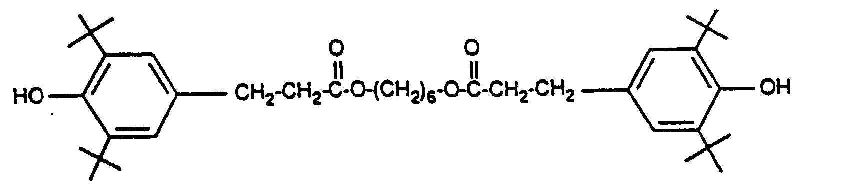 {3,5-bis(1,1-diméthyléthyl)-4-hydroxyphénylpropionate de 1,6-hexanediyle} ; 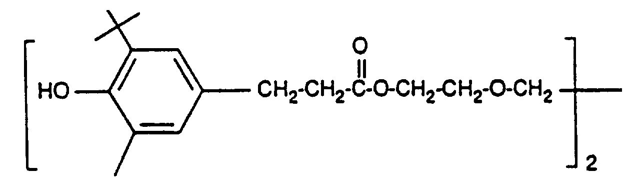 {bis[3-(1,1-diméthyléthyl)-4-hydroxy-5-méthylphénylpropionate] de 2,2'-éthylènedioxy-diéthyle} ; 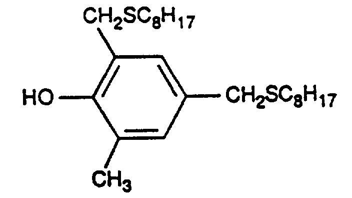 {2-méthyl-4,6-bis[(octylthio)méthyl]phénol} ; 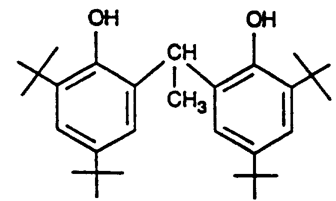 {2,2'-éthylidène-bis(4,6-di-*tert*-butylphénol)} ; 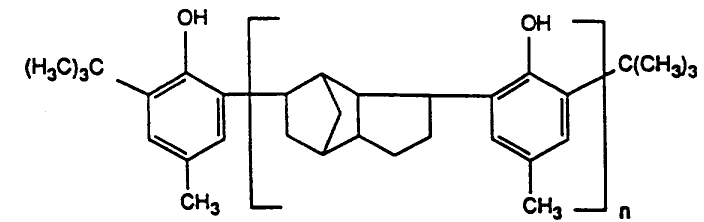 {produit réactionnel butylé de *para*-crésol et de dicyclopentadiène (poids moléculaire moyen : 600-700)} ; 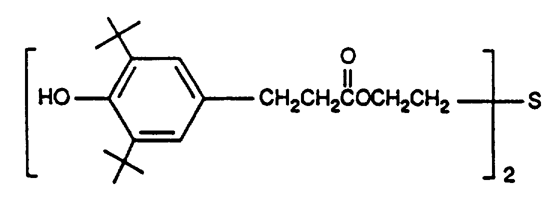 {bis[3,5-bis(1,1-diméthyléthyl)-4-hydroxyphénylpropionate] de 2,2'-thio-diéthyle} ; 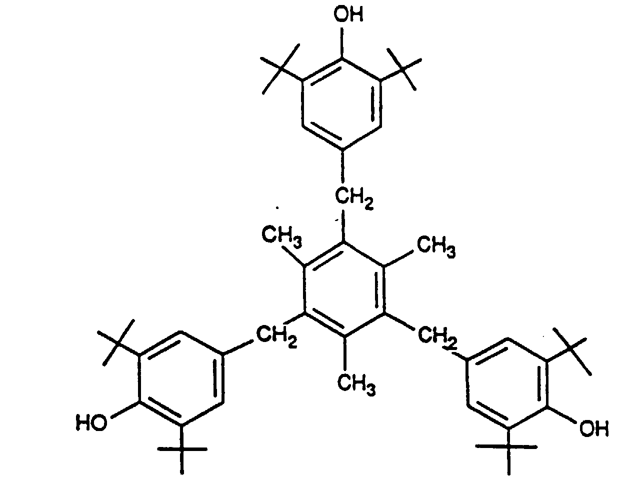 {4,4',4"-[(2,4,6-triméthylbenzène-1,3,5-triyl)tris(méthylène)]-tris[2,6-bis(1,1-diméthyléthyl)phénol]} ; 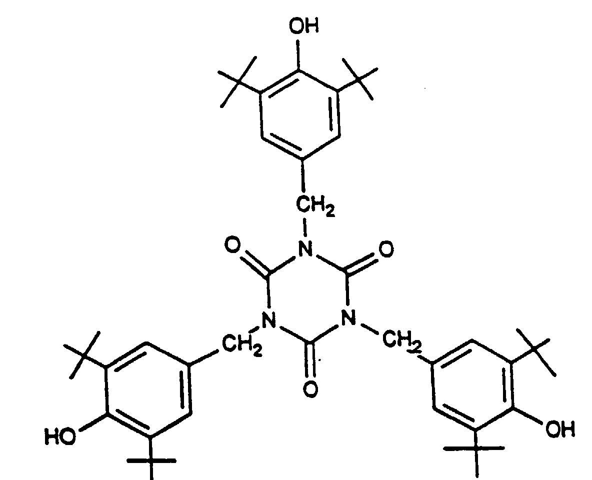 {1,3,5-tris[[3,5-bis(1,1-diméthyléthyl)-4-hydroxyphényl]-méthyl]-1,3,5-triazine-2,4,6-(1H,3H,5H)-trione] ; ester octadécylique d'acide β-(3,5-di-*tert*-butyl-4-hydroxyphényl)-propionique ; bis[3-(3-*tert*-butyl-4-hydroxy-5-méthylphényl)]propionate de triéthylène-glycol ; bis[3-(3,5-di-tert-butyl-4-hydroxyphényl)]propionate de 1,6-hexanediol ; et monoacrylate de 2,2'-méthylène-bis(4-méthyl-6-*tert*-butylphénol).

15. Un procédé selon la revendication 1, dans lequel le composant a) est l'ester octadécylique d'acide β-(3,5-di-tert-butyl-4-hydroxyphényl)propionique, le bis[3-(3-*tert*-butyl-4-hydroxy-5-méthylphényl)]propionate de triéthylèneglycol, le bis[3-(3,5-di-*tert*-butyl-4-hydroxyphényl)]-propionate de 1,6-hexanediol ou le monoacrylate de 2,2'-méthylène-bis(4-méthyl-6-*tert*-butylphénol).

16. Un procédé selon la revendication 1, dans lequel le composant b) est un composé minéral choisi dans la série des oxydes métalliques.

17. Un procédé selon la revendication 1, dans lequel le composant b) est l'oxyde de calcium.

18. Un procédé selon la revendication 1, dans lequel un sel de métal d'un acide gras est ajouté comme composant supplémentaire, le métal étant un élément du groupe II principal ou secondaire ou l'étain.

19. Un procédé selon la revendication 1, dans lequel un stéarate, lactate ou laurate de magnésium, étain, zinc ou calcium, ou un mélange d'entre eux, est utilisé comme composant supplémentaire.

20. Un procédé selon la revendication 1, dans lequel le stéarate de calcium ou le stéarate de zinc est utilisé comme composant supplémentaire.

21. Un procédé selon la revendication 1, dans lequel un agent de synergie sulfuré choisi dans la série des esters d'acide thiodipropionique est, de plus, ajouté à la matière plastique recyclée.

22. Un procédé selon la revendication 1, dans lequel un agent de synergie sulfuré choisi dans la série des esters d'acide thiodipropionique est, de plus, ajouté à la matière plastique recyclée en une proportion de 0,1 à 1 % en poids, par rapport à ladite matière recyclée.

23. Un procédé selon la revendication 1, dans lequel au moins un stabilisant à la lumière choisi dans la série des benzophénones, des benzotriazoles, des oxanilides ou des amines à empêchement stérique, ou un mélange d'entre eux, est de plus ajouté à la matière plastique recyclée.

24. Un procédé selon la revendication 1, dans lequel au moins un stabilisant à la lumière choisi dans la série des benzophénones, des benzotriazoles, des oxanilides ou des amines à empêchement stérique, ou un mélange d'entre eux, est de plus ajouté à la matière plastique recyclée en une proportion de 0,01 à 2 % en poids.

25. Un procédé selon la revendication 1, dans lequel un stabilisant à la lumière choisi dans la série des benzotriazoles, ou un stabilisant à la lumière choisi dans la série des amines à empêchement stérique, est ajouté à la matière plastique recyclée.

26. Un mélange de stabilisants pour matières thermoplastiques recyclées contenant du styrène, récupérées à partir de déchets domestiques, commerciaux ou industriels ou de collectes de matières utiles, lequel mélange comprend a) au moins un phénol à empêchement stérique, b) au moins un composé minéral choisi dans la série des oxydes métalliques, des hydroxydes métalliques ou des carbonates métalliques, et, comme composant facultatif, c) un sel métallique d'un acide gras, à condition qu'aucun phosphite ou phosphonite organique ne soit présent.

27. Un mélange de stabilisants selon la revendication 26, comprenant, pour 100 parties,
(A) comme composant a) 5 à 90 parties de bis[3-(3-*tert*-butyl-4-hydroxy-5-méthylphényl)]propionate de triéthylèneglycol, comme composant b) 10 à 95 parties d'oxyde de calcium ;
(B) comme composant a) 5 à 90 parties de l'ester octadécylique d'acide β-(3,5-di-*tert*-butyl-4-hydroxyphényl)-propionique, comme composant b) 10 à 95 parties d'oxyde de calcium ; ou
(C) comme composant a) 5 à 90 parties de bis[3-(3-*tert*-butyl-4-hydroxy-5-méthylphényl)]propionate de triéthylèneglycol, comme composant b) 5 à 90 parties d'oxyde de calcium, et comme composant c) 5 à 90 parties de stéarate de calcium.

28. Utilisation d'un mélange d'un mélange de stabilisants qui comprend a) au moins un phénol à empêchement stérique, b) au moins un composé minéral choisi dans la série des oxydes métalliques, des hydroxydes métalliques ou des carbonates métalliques et, comme composant facultatif, c) au moins un sel métallique d'un acide gras, pour stabiliser des matières plastiques recyclées contenant du styrène récupérées à partir de déchets domestiques, commerciaux ou industriels, à condition qu'aucun phosphite ou phosphonite organique ne soit présent.

29. Une matière plastique recyclée contenant du styrène récupérée à partir de déchets domestiques, commerciaux ou industriels ou de collectes de matières utiles, laquelle matière plastique comprend a) au moins un phénol à empêchement stérique, b) au moins un composé minéral choisi dans la série des oxydes métalliques, des hydroxydes métalliques ou des carbonates métalliques et, comme composant facultatif, c) au moins un sel métallique d'un acide gras, à condition qu'aucun phosphite ou phosphonite organique ne soit présent.
